# EUROPEAN PATENT APPLICATION

(11) **EP 3 869 379 A1**
(43) Date of publication of application: **25.08.2021**
(21) Application number: 20158994.2
(22) Date of filing: 24.02.2020
(51) Int. Cl.: G06F 30/27, G06F 113/06

(54) **A METHOD FOR COMPUTER-IMPLEMENTED SIMULATION OF A WIND TURBINE**

(71) Applicant: Siemens Gamesa Renewable Energy A/S, 7330 Brande (DK)
(72) Inventor: Yashchenko, Sergey, 22607 Hamburg (DE)
(74) Representative: Aspacher, Karl-Georg

(57) **Abstract**

The application refers to a method for computer-implemented simulation of a wind turbine (1), where the method comprises the following steps:
a) providing a time series of wind speed data (X(t-2), X(t-1), X(t)), the time series comprising respective wind speed data (X(t-2), X(t-1), X(t)) for several successive time points (t-2, t-1, t), where the wind speed data (X(t-2), X(t-1), X(t)) for a respective time point (t-2, t-1, t) contain wind speed vectors for a plurality of spatial positions within and/or adjacent to the rotor plane spanned by the rotor blades (6);
b) predicting one or more operational parameters (Y(t), Y(t+1)) of the wind turbine (1) for a number of prediction time points (t, t+1) comprising the latest time point (t) of the time series and/or one or more successive future time points (t+1) after the latest time point (t) by feeding the time series of the wind speed data (X(t-2), X(t-1), X(t)) as a digital input to a trained recurrent neural network (NN) which generates as a digital output the one or more operational parameters (Y(t), Y(t+1)) of the wind turbine (1) for the number of prediction time points (t, t+1), where the recurrent neural network (NN) is trained by supervised learning.

## Description

The invention refers to a method and an apparatus for computer-implemented simulation of a wind turbine.

Simulations of operational parameters of a wind turbine are usually performed using aeroelastic simulation tools. An example of such a simulation tool is HAWC2 (Horizontal Axis Wind Turbine Simulation Code 2nd Generation). In a first stage of this simulation tool, a detailed wind speed distribution is simulated for individual time points. The wind speed distribution comprises wind speed vectors at several spatial positions in the rotor plane of the wind turbine. In a second stage, specific characteristics of the simulated wind turbine are used in order to determine operational wind turbine parameters such as mechanical loads acting on the wind turbine or the electric power produced by the wind turbine. Aeroelastic simulations of wind turbines are very time consuming and therefore difficult to be applied in real-time applications.

Instead of aeroelastic simulations, machine learning models such as neural networks may be used in order to predict operational parameters on a wind turbine. Those models are learned by suitable training data and enable a fast prediction of operational parameters. Document [1] describes a simple feed-forward neural network with two hidden layers for load estimation of a wind turbine.

It is an object of the invention to provide a method and an apparatus performing a fast and reliable computer-implemented simulation of a wind turbine.

This object is solved by the independent patent claims. Preferred embodiments of the invention are described in the dependent claims.

The method of the invention is used for computer-implemented simulation of a wind turbine. The simulated wind turbine, i.e. the wind turbine model used in the method, comprises a tower and a nacelle which is arranged on top of the tower. An electric generator is disposed within the nacelle and a rotor having several rotor blades is connected to the nacelle. The rotor is configured to be rotated by wind around a rotor axis where the mechanical energy of the rotation of the rotor is converted into electric energy by the electric generator. The method according to the invention comprises steps a) and b) described in the following. In those steps, the data and parameters being processed refer to digital data and parameters.

In step a), a time series of wind speed data is provided, i.e. the time series is provided as digital data in a computer performing the method of the invention. The time series comprises respective wind speed data for several successive time points, where the wind speed data for a respective time point contain wind speed vectors for a plurality of spatial positions within and/or adjacent to the rotor plane spanned by the rotor blades.

In step b), one or more operational parameters of the wind turbine for a number of prediction time points are predicted. The number of prediction time points comprises the latest time point of the time series and/or one or more successive future time points after the latest time point. Hence, the latest time point of the time series may also be a prediction time point. The prediction is performed by feeding the time series of the wind speed data as a digital input to a trained recurrent neural network which generates as a digital output the one or more operational parameters of the wind turbine for the number of prediction time points. The recurrent neural network is trained (i.e. has been trained) by supervised learning, i.e. by using training data sets where each training data set comprises one or more known operational parameters of the wind turbine for predetermined wind speed data at a predetermined time point. Recurrent neural networks are well-known and comprise one or more hidden layers with connections between neurons within a hidden layer and/or connections from neurons of a hidden layer to neurons of a preceding hidden layer.

The method of the invention has the advantage that a fast and reliable simulation of operational wind turbine parameters can be achieved due to the use of a recurrent neural network. The recurrent neural network makes it possible to process a time series of several wind speed data as an input for predicting one or more operational parameters.

In a preferred embodiment, the recurrent neural network used in the method of the invention is a so-called LSTM network (LSTM = Long Short-Term Memory). Such an LSTM network comprises a plurality of LSTM units. LSTM networks and corresponding LSTM units are well-known from the prior art. In this respect, reference is made to document [2] which describes the structure of LSTM units.

In a particularly preferred embodiment, the LSTM network is a convolutional LSTM network where the activities of the neurons within the LSTM units are described by a convolution instead of a matrix multiplication. The structure of convolutional LSTM units is also described in document [2] (see particularly equation (3)). The use of a convolutional LSTM network provides particularly good simulation results because such a network is well suited for processing two-dimensional data like the wind speed data used as input in a method of the invention. Nevertheless, in an alternative embodiment, the LSTM network may also be a fully connected LSTM network where the activities of the neural within the LSTM units are described by matrix multiplications. Moreover, also other well-known types of recurrent neural networks may be used in the method of the invention.

In another preferred embodiment, the LSTM network has a specific configuration. According to this configuration, each LSTM unit of the LSTM network is associated with a respective time point out of all time points of the time series and all of the prediction time points. Furthermore, each LSTM unit associated with a respective time point of the time series receives the wind speed data for its associated respective time point as an input. Furthermore, each LSTM unit of the LSTM network generates an output in the form of one or more operational parameters at its associated time point where a respective LSTM unit associated with a respective prediction time point generates the one or more predicted operational parameters at its associated respective prediction time point. In order to connect the LSTM units, the output of a respective LSTM unit is fed to the LSTM unit associated with the next time point following the time point associated with the respective LSTM unit if such a next time point exists. I.e., for the LSTM unit associated with the latest time point out of the time points of the time series and the prediction time points, there is no connection to another LSTM unit.

The method of the invention may be used to predict different kinds of operational parameters. In a preferred embodiment, the one or more operational parameters comprise:
- one or more mechanical loads acting on the wind turbine, particularly one or more bending moments for at least one rotor blade and preferably each rotor blade of the rotor; and/or
- the electric power produced by the generator of the wind turbine; and/or
- the speed of the rotor of the wind turbine; and/or
- one or more accelerations of the nacelle of the wind turbine.

In another preferred embodiment, the time series of wind speed data provided in step a) is determined based on environmental data in the surrounding of the wind turbine, where the environmental data comprise information about wind in the surrounding of the wind turbine. This wind information differs from the detailed wind speed data provided in step a) and preferably includes only a few wind speed values, e.g. wind speed values in different height positions at the location of the wind turbine. Furthermore, the environmental data may include additional information other than wind information, e.g. information about the temperature and the humidity in the surrounding of the turbine. Preferably, in order to determine the time series of the wind speed data based on the environmental data, a well-known simulation tool, such as the above-mentioned tool HAWC2, is used.

The environmental data mentioned above may refer to simulated data, i.e. data not stemming from the operation of a real wind turbine. However, in an alternative embodiment, the method of the invention is performed in parallel with the operation of a real wind turbine being identical with the wind turbine being simulated, where the environmental data in the surrounding of the wind turbine correspond to the real data in the surrounding of the real wind turbine.

The above embodiment of the invention enables a monitoring of the real turbine. In a preferred variant of this embodiment, one or more actions with respect to the real wind turbine are automatically performed in case that at least one of the one or more predicted operational parameters of the wind turbine does not fulfill a predetermined threshold criterion. In other words, the one or more actions are performed in case that the operational parameters expected by the simulation show an abnormal behavior. E.g., a stop of the real turbine may be initiated as an action in case that at least one of the one or more operational parameters of the wind turbine does not fulfill the predetermined threshold criterion, e.g. when a predicted mechanical load is above a certain threshold in order to avoid a damage at the wind turbine. Additionally or alternatively, an alarm may be generated via a user interface as an action.

Besides the above method, the invention refers to an apparatus for computer-implemented simulation of a wind turbine comprising a tower and a nacelle which is arranged on the top of the tower, where an electric generator is disposed within the nacelle and a rotor having several rotor blades is connected to the nacelle, the rotor being configured to be rotated by wind around a rotor axis, where the mechanical energy of the rotation of the rotor is converted into electric energy by the electric generator. This apparatus is configured to perform the method according to the invention or one or more preferred embodiments of the method according to the invention.

Furthermore, the invention refers to a computer program product with a program code, which is stored on a non-transitory machine-readable carrier, for carrying out the method according to the invention or one or more preferred embodiments thereof when the program code is executed on a computer.

Furthermore, the invention refers to a computer program with a program code for carrying out a method according to the invention or one or more preferred embodiments thereof when the program code is executed on a computer.

In the following, an embodiment of the invention will be described in detail with respect to the accompanying drawings wherein:
- Fig. 1: shows in a schematic side view the structure of a wind turbine being simulated according to an embodiment of the invention;
- Fig. 2: illustrates the structure of a neural network in the form of an LSTM network being used for the simulation of the turbine shown in Fig. 1.

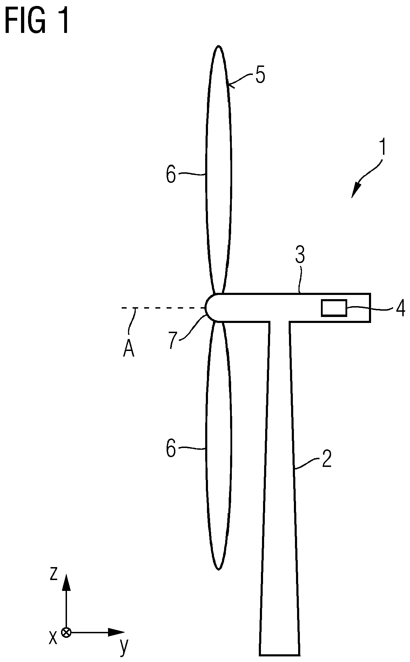

Fig. 1 shows the structure of a wind turbine which is simulated based on a variant of the method according to the invention which will be described below. The simulated wind turbine is designated with reference numeral 1 and comprises a tower 2 extending in the vertical direction. A nacelle 3 is located on top of this tower. An electric generator 4 is disposed within the nacelle. One side of the nacelle is connected to a rotor 5 having rotor blades 6 fixed to a rotor hub 7. The hub 7 is attached to the nacelle 3. The rotor 5 rotates around a horizontal rotor axis A which extends along the longitudinal direction of the nacelle. Three rotor blades 6 are attached to the rotor hub 7. The blades are arranged with an angular distance of 120° in the rotor plane which is perpendicular to the rotor axis A.

The position of the wind turbine 1 with respect to the earth's surface is described by a Cartesian coordinate system comprising an x-axis, a y-axis and a z-axis. The x-axis and the y-axis extend in a horizontal plane whereas the z-axis extends in a vertical direction perpendicular to the earth's surface. The vertical direction corresponds to the extension of the tower 2. The nacelle 3 can be rotated around a longitudinal axis of the tower, i.e. an axis parallel to the z-axis of the Cartesian coordinate system. In case of wind, the nacelle is positioned such that the wind substantially falls in the direction of the rotor axis A on the rotor 5, resulting in a rotation of the rotor.

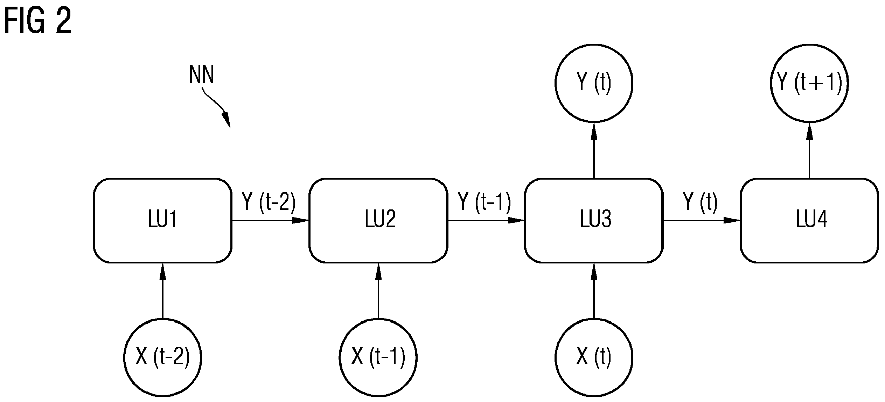

The simulation method described herein predicts operational parameters of the wind turbine 1 in dependence on a time series of wind speed data, i.e. a series of wind data occurring at several successive time points of the time series. To do so, the LSTM neural network NN shown in Fig. 2 is used. In the example described herein, the time series includes the time points t-2, t-1 and t with corresponding wind speed data X(t-2) at time point t-2, X(t-1) at time point t-1 and X(t) at time point t. The wind speed data at the respective time point refer to a wind distribution described by a field of wind speed vectors for a plurality of spatial positions within the rotor plane spanned by the rotor blade 6 of the wind turbine 1. In other words, the respective wind speed data are described by a two-dimensional matrix of spatial positions where the matrix entry at a respective spatial position comprises a wind speed vector. E.g., the wind speed vector can be described by an x-component, y-component and z-component of the Cartesian coordinate system shown in Fig. 1.

The wind speed data X(t-2), X(t-1) and X(t) form the input layer of the LSTM network NN shown in Fig. 2. This LSTM network provides as an output layer predicted operational parameters for the latest time point t of the time series and one future time point t+1, namely operational parameters Y(t) and Y(t+1). To do so, the LSTM network uses LSTM units LU1, LU2, LU3 and LU4 which form the hidden layers of the LSTM network. The structure of those LSTM units which are also called LSTM modules is well-known for a skilled person. Particularly, an LSTM unit comprises a memory cell which essentially acts as an accumulator of state information in the network as well as neurons in the form of an input gate, an output gate and a forget gate. The memory cell is accessed, written and cleared by the input gate, output gate and forget gate. The LSTM neural network has been trained beforehand based on training data describing for respective time points known wind speed data with associated operational parameters.

In the embodiment described herein, a so-called convolutional LSTM network is used for predicting operational parameters. This kind of network is particularly suited in order to process two-dimensional matrix data as it is the case for the wind speed data forming the input in the LSTM network of Fig. 2. In a convolutional LSTM network, the activities of the neurons are described by a convolution instead of a matrix multiplication. Nevertheless, in an alternative embodiment, also a fully connected LSTM network containing activities of neurons based on matrix multiplications may be used in order to predict the operational parameters from the time series of wind speed data. Furthermore, other types of recurrent network are also suitable for performing the prediction described herein.

In order to process the time series of wind speed data, an LSTM unit is provided for each of the time points t-2, t-1, t and t+1 in the network NN of Fig. 1. The LSTM unit LU1 receives the wind speed data X(t-2) and outputs a set of operational parameters Y(t-2) (i.e. at least one operational parameter) valid for the time point t-2. The set of operational parameters Y(t-2) is fed to LSTM unit LU2 which also receives as an input the wind speed data X(t-1). The LSTM unit LU2 generates the set of operational parameters Y(t-1) which is fed to LSTM unit LU3 which outputs the set of predicted operational parameters Y(t) at the time point t, i.e. at the latest time point of the time series. The LSTM unit LU3 also receives the wind speed data X(t) for the time point t.

The LSTM network in Fig. 2 also predicts the set of operational parameters Y(t+1) at a later (future) time point t+1. To do so, the output Y(t) of the LSTM unit LU3 is fed to the LSTM unit LU4 which generates as an output the set of operational parameters Y(t+1). As the time point t+1 is in the future, the LSTM unit LU4 does not receive wind speed data as an input.

Fig. 2 describes an LSTM network where two sets of operational parameters for time points t and t+1 are predicted based on a time series comprising wind speed data at three time points t-2, t-1 and t. However, this is only an example and the neural network may be structured to predict operational parameters for another number of time points and to process a time series with another number of time points. In case that those numbers change, the number of LSTM units is changed accordingly. Different operational parameters may be predicted with the network of Fig. 2. In a preferred embodiment, one or more mechanical loads acting on the wind turbine and/or the electric power produced by the generator of the wind turbine are predicted as operational parameters.

As mentioned above, the embodiment described herein is used to simulate operational parameters of a wind turbine based on wind speed data in the form of a wind speed vector fields. Preferably, those wind speed vector fields are derived from environmental data at the location of the wind turbine by using a known simulation program, e.g. the simulation tool HAWC2. In order to determine a corresponding wind speed vector field, the simulation program processes environmental parameters comprising wind information which is not as detailed as the wind speed vector field. Additionally to the wind information, the environmental data may include other information at the location of the wind turbine, such as temperature, humidity and the like.

In the embodiment described herein, the environmental data are simulated data, i.e. not real data occurring during the operation of a real wind turbine. Nevertheless, also real environmental data during an operation of a real turbine may be used in order to determine the respective wind speed vector fields and to derive operational parameters. In this case, the real wind turbine corresponds to the wind turbine which is simulated with the LSTM network. When processing real environmental data, the simulation method as described in the foregoing may be used for monitoring the real wind turbine To do so, a corresponding action may be taken in case that one or more predicted operational parameters do not fulfill a threshold criterion. E.g., in case that the predicted mechanical loads acting on the wind turbine are higher than a predetermined threshold, an appropriate action is to shut down the turbine in order to avoid a damage of the turbine due to too high mechanical stress.

The embodiment as described in the foregoing has several advantages. Particularly, the method provides a fast and reliable simulation of wind turbine parameters using a convolutional LSTM neural network. Such a network is particularly suitable for two-dimensional structures like the wind speed data described above. The simulation as described above may be used in real-time applications, such as a digital twin.

### List of references

[1] Xingjian, S. et al. Convolutional LSTM network: A Machine Learning Approach for Precipitation Nowcasting. In: Proceedings of the 28th International Conference on Neural Information Processing Systems, 802-810 (2015).
[2] Schroder, L. et al. Wind turbine site-specific load estimation using artificial neural networks calibrated by means of high-fidelity load simulations. J. Phys.: Conf. Ser. 1037 (2018).

## Claims

1. A method for computer-implemented simulation of a wind turbine (1) comprising a tower (2) and a nacelle (3) which is arranged on top of the tower (2), where an electric generator (4) is disposed within the nacelle (3) and a rotor (5) having several rotor blades (6) is connected to the nacelle (3), the rotor (5) being configured to be rotated by wind around a rotor axis (A), where the mechanical energy of the rotation of the rotor (5) is converted into electric energy by the electric generator (4), where the method comprises the following steps:
a) providing a time series of wind speed data (X(t-2), X(t-1), X(t)), the time series comprising respective wind speed data (X(t-2), X(t-1), X(t)) for several successive time points (t-2, t-1, t), where the wind speed data (X(t-2), X(t-1), X(t)) for a respective time point (t-2, t-1, t) contain wind speed vectors for a plurality of spatial positions within and/or adjacent to the rotor plane spanned by the rotor blades (6);
b) predicting one or more operational parameters (Y(t), Y(t+1)) of the wind turbine (1) for a number of prediction time points (t, t+1) comprising the latest time point (t) of the time series and/or one or more successive future time points (t+1) after the latest time point (t) by feeding the time series of the wind speed data (X(t-2), X(t-1), X(t)) as a digital input to a trained recurrent neural network (NN) which generates as a digital output the one or more operational parameters (Y(t), Y(t+1)) of the wind turbine (1) for the number of prediction time points (t, t+1), where the recurrent neural network (NN) is trained by supervised learning.

2. The method according to claim 1, wherein the recurrent neural network (NN) is an LSTM network comprising a plurality of LSTM units (LU1, LU2, LU3, LU4).

3. The method according to claim 2, wherein the LSTM network is a convolutional LSTM network.

4. The method according to claim 2 or 3, wherein the LSTM network has a configuration in which:
- each LSTM unit (LU1, LU2, LU3, LU4) of the LSTM network is associated with a respective time point (t-2, t-1, t, t+1) out of all time points (t-2, t-1, t) of the time series and all of the prediction time points (t+1);
- each LSTM unit (LU1, LU2, LU3, LU4) associated with a respective time point (t-2, t-1, t) of the time series receives the wind speed data (t-2, t-1, t) for its associated respective time point (t-2, t-1, t) as an input;
- each LSTM unit (LU1, LU2, LU3, LU4) of the LSTM network generates an output in the form of one or more operational parameters (Y(t-2), Y(t-1), Y(t), Y(t+1)) at its associated time point (t-2, t-1, t, t+1) where a respective LSTM unit (LU1, LU2, LU3, LU4) associated with a respective prediction time point (t, t+1) generates the one or more predicted operational parameters (Y(t), Y(t+1)) at its associated respective prediction time point (t, t+1);
- the output of a respective LSTM unit (LU1, LU2, LU3, LU4) is fed to the LSTM unit (LU1, LU2, LU3, LU4) associated with the next time point (t-1, t, t+1) following the time point (t-2, t-1, t) associated with the respective LSTM unit (LU1, LU2, LU3, LU4) if such a next time point (t-1, t, t+1) exists.

5. The method according to one of the preceding claims, wherein the one or more operational parameters (Y(t), Y(t+1)) comprise:
- one or more mechanical loads acting on the wind turbine (1), particularly one or more bending moments for at least one rotor blade (6) of the rotor (5); and/or
- the electric power produced by the generator (4) of the wind turbine (1); and/or
- the speed of the rotor (5) of the wind turbine (1); and/or
- one or more accelerations of the nacelle (3) of the wind turbine (1).

6. The method according to one of the preceding claims, wherein the time series of wind speed data (t-2, t-1, t) provided in step a) is determined based on environmental data in the surrounding of the wind turbine (1), the environmental data comprising information about wind in the surrounding of the wind turbine (1).

7. The method according to claim 6, wherein the environmental data refer to simulated data.

8. The method according to claim 6, wherein the method is performed in parallel with the operation of a real wind turbine being identical with the wind turbine (1) being simulated, where the environmental data in the surrounding of the wind turbine (1) correspond to real data in the surrounding of the real wind turbine.

9. The method according to claim 8, wherein one or more actions with respect to the real wind turbine are automatically performed in case that at least one of the one or more predicted operational parameters (Y(t), Y(t+1)) of the wind turbine (1) does not fulfill a predetermined threshold criterion.

10. An apparatus for computer-implemented simulation of a wind turbine (1) comprising a tower (2) and a nacelle (3) which is arranged on top of the tower (2), where an electric generator (4) is disposed within the nacelle (3) and a rotor (5) having several rotor blades (6) is connected to the nacelle (3), the rotor (5) being configured to be rotated by wind around a rotor axis (A), where the mechanical energy of the rotation of the rotor (5) is converted into electric energy by the electric generator (4), where the apparatus is configured to perform a method comprising the following steps:
a) providing a time series of wind speed data (X(t-2), X(t-1), X(t)), the time series comprising respective wind speed data (X(t-2), X(t-1), X(t)) for several successive time points (t-2, t-1, t), where the wind speed data (X(t-2), X(t-1), X(t)) for a respective time point (t-2, t-1, t) contain wind speed vectors for a plurality of spatial positions within and/or adjacent to the rotor plane spanned by the rotor blades (6);
b) predicting one or more operational parameters (Y(t), Y(t+1)) of the wind turbine (1) for a number of prediction time points (t, t+1) comprising the latest time point (t) of the time series and/or one or more successive future time points (t+1) after the latest time point (t) by feeding the time series of the wind speed data (X(t-2), X(t-1), X(t)) as a digital input to a trained recurrent neural network (NN) which generates as a digital output the one or more operational parameters (Y(t), Y(t+1)) of the wind turbine (1) for the number of prediction time points (t, t+1), where the recurrent neural network (NN) is trained by supervised learning.

11. The apparatus according to claim 10, wherein the system is configured to perform a method according to one of claims 2 to 9.

12. A computer program product with program code, which is stored on a non-transitory machine-readable carrier, for carrying out a method according to one of claims 1 to 9 when the program code is executed on a computer.

13. A computer program with program code for carrying out a method according to one of claims 1 to 9 when the program code is executed on a computer.
